# EUROPEAN PATENT APPLICATION

(11) **EP 2 151 905 A2**
(43) Date of publication of application: **10.02.2010**
(21) Application number: 09167295.6
(22) Date of filing: 05.08.2009
(51) Int. Cl.: H02J 3/14

(54) **Optimizing usage of powered systems**

(30) Priority: 05.08.2008 US 185978
(71) Applicant: The Boeing Company, Chicago, IL 60606-2016 (US)
(72) Inventor: Vian, John L., Renton, WA 98056 (US); Breit, Joseph S., Bellevue, WA 98008 (US); Chiu, Stephen L., Thousand Oaks, CA 91362 (US); Bogdanov, Alexander A., Simi Valley, CA 93065 (US)
(74) Representative: Howson, Richard G.B.

(57) **Abstract**

According to an embodiment, an apparatus includes a power source, a set of primary loads, a set of life extension loads, and a controller. The power source is capable of supplying power and the set of primary loads is capable of being operated using the power. The set of life extension loads is capable of being operated using the power and capable of extending life of the set of primary loads. The controller is capable of controlling an operation of the set of primary loads and the set of life extension loads to optimize a total systems operating metric consisting of performance, energy use, and life to reduce a total cost.

## Description

The present disclosure relates generally to managing systems and in particular, to managing power systems. Still more particularly, the present disclosure relates to a method, apparatus, and program code for reducing a total life cycle cost for a system containing a set of mechanical, electrical, and other components that provide power generation, conversion, distribution, and usage.

With an aircraft, the cost of the aircraft is one part of the total life cycle cost. Other costs include maintenance costs, energy usage costs, and costs to replace and/or repair systems and components. Further, another cost may be the availability of the aircraft. A cost is present in terms of lost revenue when an aircraft is in maintenance or otherwise unavailable.

Health monitoring systems have been implemented in aircraft to monitor various systems, such as, for example, electrical power generation systems, braking systems, engine systems, and other systems. With a capability of monitoring the different systems, fault detection and isolation may be performed more quickly. Further, health monitoring systems also may provide a capability to predict when faults or less than optimal performance of a system may occur. With this type of information, maintenance planning may be improved.

Further, different control systems in an aircraft are designed to achieve or reach various performance metrics. For example, control systems may be used to ensure that performance levels are reached by the different systems in an aircraft. More particularly, control systems may be used to ensure that electric actuators in an aircraft reach specified speed and accuracy performance levels. Additionally, these controllers also may be programmed and designed to reduce energy usage. These and other efforts are made to reduce the total life cycle cost of aircraft.

### SUMMARY

In one advantageous embodiment, an apparatus comprises a power source, a set of primary loads, a set of life extension loads, and a controller. The power source is capable of supplying power and the set of primary loads is capable of being operated using the power. The set of life extension loads is capable of being operated using the power and capable of extending a life of the set of primary loads. The controller is capable of controlling an operation of the set of primary loads and the set of life extension loads based on performance, energy use, and life to reduce a total cost.

In another advantageous embodiment, an apparatus comprises a load and a controller. The controller is capable of controlling an operation of the load based on performance, energy use, and life time to reduce a total cost of the load.

In yet another advantageous embodiment, a method is present for operating a set of loads. The method is capable of monitoring a set of parameters and energy use for the set of loads; identifying a remaining life for the set of loads; and changing at least one of performance and energy use for the set of loads to reduce a total cost for the set of loads based on a policy.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** is a diagram illustrating an aircraft manufacturing and service method in accordance with an advantageous embodiment;
**Figure 2** is a diagram of an aircraft in which an advantageous embodiment may be implemented;
**Figure 3** is a diagram of a system management environment in accordance with an advantageous embodiment;
**Figure 4** is a diagram illustrating an example of costs versus controlled system operating point in accordance with an advantageous embodiment;
**Figure 5** is a diagram illustrating a total cost involved with operating a life extension load and a primary load in accordance with an advantageous embodiment;
**Figure 6** is a diagram of a system management environment in an aircraft in accordance with an advantageous embodiment;
**Figure 7** is a diagram of a system management environment in an aircraft in accordance with an advantageous embodiment;
**Figure 8** is a diagram illustrating operating loads to optimize total cost of the loads in accordance with an advantageous embodiment; and
**Figure 9** is a flow chart of a process for operating a set of loads in accordance with an advantageous embodiment.

### DETAILED DESCRIPTION

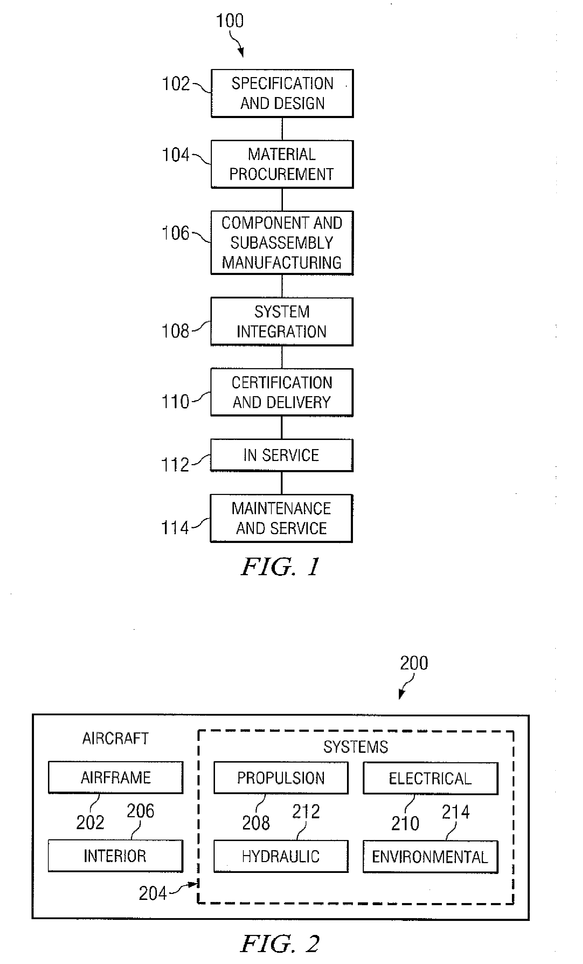

Referring more particularly to the drawings, embodiments of the disclosure may be described in the context of the aircraft manufacturing and service method **100** as shown in **Figure 1** and aircraft **200** as shown in **Figure 2****.** Turning first to **Figure 1****,** a diagram illustrating an aircraft manufacturing and service method is depicted in accordance with an advantageous embodiment. During pre-production, exemplary aircraft manufacturing and service method **100** may include specification and design **102** of aircraft **200** in **Figure 2** and material procurement **104.**

During production, component and subassembly manufacturing **106** and system integration **108** of aircraft **200** in **Figure 2** takes place. Thereafter, aircraft **200** in **Figure 2** may go through certification and delivery **110** in order to be placed in service **112.** While in service by a customer, aircraft **200** in **Figure 2** is scheduled for routine maintenance and service **114,** which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of venders, subcontractors, and suppliers; and an operator may be an airline, leasing company, military entity, service organization, and so on.

With reference now to **Figure 2****,** a diagram of an aircraft is depicted in which an advantageous embodiment may be implemented. In this example, aircraft **200** is produced by aircraft manufacturing and service method **100** in **Figure 1** and may include airframe **202** with a plurality of systems **204** and interior **206.** Examples of systems **204** include one or more of propulsion system **208,** electrical system **210,** hydraulic system **212,** and environmental system **214.** Any number of other systems may be included. Although an aerospace example is shown, different advantageous embodiments may be applied to other industries, such as the automotive or ship industry.

Apparatus and methods embodied herein may be employed during any one or more of the stages of aircraft manufacturing and service method **100** in **Figure 1****.** For example, components or subassemblies produced in component and subassembly manufacturing **106** in **Figure 1** may be fabricated or manufactured in a manner similar to components or subassemblies produced while aircraft **200** is in service **112** in **Figure 1****.**

Also, one or more apparatus embodiments, method embodiments, or a combination thereof may be utilized during production stages, such as component and subassembly manufacturing **106** and system integration **108** in **Figure 1****,** for example, without limitation, by substantially expediting the assembly of or reducing the cost of aircraft **200.** Similarly, one or more of apparatus embodiments, method embodiments, or a combination thereof may be utilized while aircraft **200** is in service **112** or during maintenance and service **114** in **Figure 1****.**

The different advantageous embodiments recognize and take into account that currently available management systems are capable of only managing the performance and/or power usage of a system. The different advantageous embodiments recognize that these types of systems are not capable of controlling loads in a manner that extends the life of the entire system.

The different advantageous embodiments recognize that extending the life of a system does not necessarily involve reaching performance metrics and/or reducing energy usage costs. The different advantageous embodiments recognize that the total life cycle costs include both energy costs to operate a system and repair costs to repair and/or replace the system. The different advantageous embodiments recognize and take into account that currently used systems are not capable of reducing total costs.

Thus, the different advantageous embodiments provide a method and apparatus for managing loads in a system to reduce the total costs of the system. The management of the loads may include managing subsystems that contain power sources and loads. In one advantageous embodiment, an apparatus has a power source capable of supplying power, a set of primary loads, a set of life extension loads, and a controller. A set as used herein refers to one or more items. For example, a set of primary loads is one or more primary loads.

The controller is capable of controlling the operation of the set of power sources, primary loads and the set of life extension loads based on performance, energy use, and life to reduce a total cost. The performance is the manner in which the different sources or loads may perform. The energy may be provided by different power sources and usage may be the energy used by the different loads. The life in these examples is the life of the different loads. In other words, the life is how long a particular load may last. The life of a power source or load may vary depending on the performance metric set for the particular load.

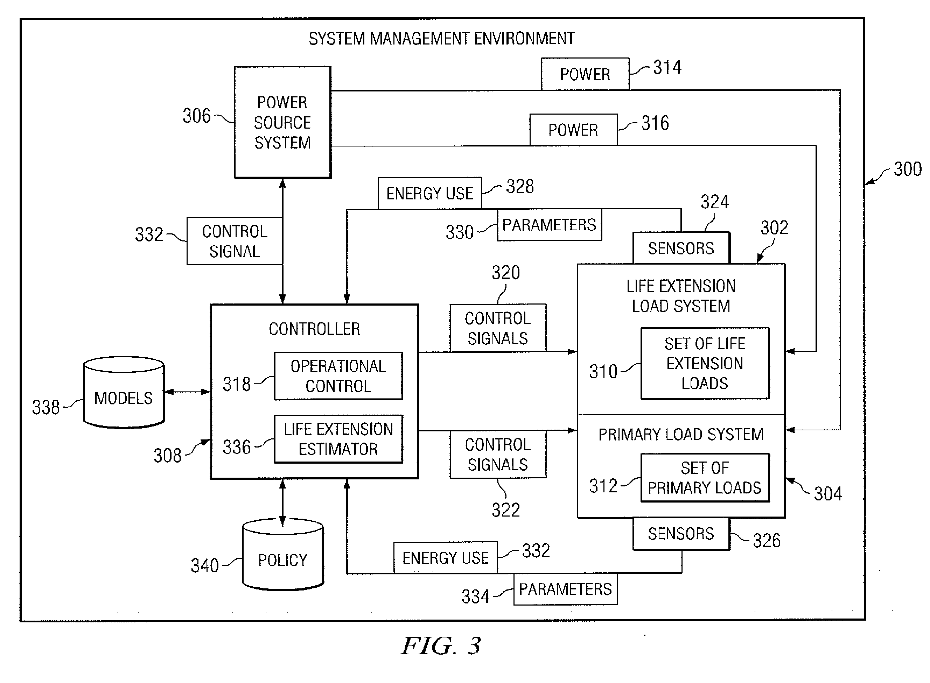

With reference now to **Figure 3****,** a diagram of a system management environment is depicted in accordance with an advantageous embodiment. In this example, system management environment **300** may be, for example, an environment found in aircraft **200** in **Figure 2****.** This environment may include various portions for all of systems **204** in aircraft **200.** In this example, system management environment **300** includes life extension load system **302,** primary load system **304,** power source system **306** and controller **308.** Controller **308** may control power source system **306,** life extension load system **302,** and primary load system **304.**

In these examples, life extension load system **302** contains set of life extension loads **310,** while primary load system **304** contains set of primary loads **312.** A life extension load within set of life extension loads **310** is associated with a primary load within set of primary loads **312.** In these examples, a load is a device that uses hydraulic, pneumatic, mechanical, electrical, or other types of power. Loads also may be referred to in conjunction with their power source. For example, loads that use electrical power may be referred to as electrical loads.

A life extension load is associated with a primary load when the life extension load provides a capability to extend the life of the primary load. Set of life extension loads **310** may comprise, for example, at least one of a liquid cooling system, a ram air cooling system, an extended cooling system, a vibration control device, an acoustic control device, a power filtering unit, a fluid filtering unit, a lubrication unit, and some other suitable device.

As used herein, the phrase "at least one of" when used with a list of items means that different combinations of one or more of the items may be used and only one of each item in the list may be needed. For example, "at least one of item A, item B, and item C" may include, for example, without limitation, item A or item A and item B. This example also may include item A, item B, and item C or item B and item C.

In other examples, "at least one of" may be, for example, without limitation, two of item A, one of item B, and ten of item C; four of item B and seven of item C; or other suitable combinations.

Set of primary loads **312** in these examples may comprise at least one of a hydraulic system, avionics, a landing gear system, an engine, a brake system, an environmental control system, an in-flight entertainment system, a navigation system, and some other suitable device. Life extension load system **302** and primary load system **304** are powered by power source system **306.** Power source system **306** supplies power **314** to life extension load system **302** and supplies power **316** to primary load system **304.**

Power source system **306** supplies power to loads. Power source system **306** may take various forms. For example, power source system **306** may be a generator, an engine, a battery, a fuel cell, an electronic power supply, or some other suitable source of power. Power source system **306** may vary power **314** and power **316** supplied to different loads within life extension load system **302** and/or primary load system **304.** The variance of power supplied is controlled by controller **308.** In these examples, operational control **318** may send control signal **332** to power source system **306** to vary power **314** and/or power **316** as needed.

In these examples, power source system **306** may be a power source or may be multiple power sources that provide power. Power source system **306** may contain heterogeneous or homogeneous power sources depending on the particular implementation. Reduction of power to a load may be associated with extension of the life of the load. In a like manner, reduction of power from a power source may be associated with extension of the life of the power source.

Further, in some advantageous embodiments, some primary loads may have more than one life extension load associated with the primary load. Also, a life extension load within set of life extension loads **310** also may be associated with power source system **306.**

Further, operational control **318** and controller **308** may send control signals **320** to life extension load system **302** and control signals **322** to primary load system **304.** Control signals **320** and **322** change the manner in which different loads operate. Control signals **320** and **322** may be used to change the performance and/or energy usage of the different loads within life extension load system **302** and primary load system **304.** Operational control **318** is a software process and makes these changes based on data received from life extension load system **302** and primary load system **304.** This data may be identified using sensors **324** and sensors **326.**

Sensors **324** monitor set of life extension loads **310** within life extension load system **302,** while sensors **326** monitor set of primary loads **312** within primary load system **304.** Sensors **324** may generate data, such as energy use data **328** and parameters **330.** Sensors **326** may generate data, such as energy use data **332** and parameters **334.** This data is sent back to controller **308.**

The data from sensors **324** and **326** is used by life extension estimator **336** in conjunction with models **338** to identify the remaining life for a particular load within life extension load system **302** and/or primary load system **304.** Life extension estimator **336** also is implemented as a software process in these examples. Models **338** contain models of the different loads within life extension load system **302** and primary load system **304.** These models may be used to identify life remaining for a particular load based on energy usage and/or parameters returned for the particular load. Models **338** also may include models for identifying the total costs of operating loads.

Models **338** contain information needed to estimate the life of a power source or load based on various parameters that are present during operation of the load. The life of a load is how long the load will last until a replacement of the load is needed. For example, a capacitor in a motor drive system may have an expected life based on the core temperature of the capacitor and the voltage under which the capacitor operates.

As a result, the life expectancy of the motor drive system based on the capacitor may be calculated in response to parameters such as the core temperature and the voltage. With this example, the parameters received from sensors **324** and/or sensors **326** may include a core temperature and a voltage for a capacitor.

A model for the capacitor may be used to identify the remaining life with these parameters. In these examples, a capacitor manufacturer may specify the capacitor life as a function of the capacitor core temperature and applied voltage; the core temperature may be further identified as a function of the amplitude and frequency of the ripple current, Equivalent Series Resistance (ESR), and of the ambient operating temperature of the capacitor. This type of information is available and/or can be derived for many types of sources or loads under specified operating conditions.

Further, this type of information may be empirical data gathered from operation of a load. In these different illustrative examples, the models may be linear or non-linear models, or combinations thereof, depending on the particular implementation. These types of models may be obtained for various sources or loads. For example, the life of a generator, fuel cell, motorized pump, a vehicle, a computer, or some other device may be modeled for use in models **338.**

Based on the amount of life remaining, operational control **318** may send control signals **320** and/or control signals **322** to change the rate at which the life remaining for the load is reduced and/or used. This change may be performed to reduce the overall costs of a primary load. This cost also may include the cost for the life extension load associated with the primary load. The generation of these control signals may be performed using policy **340.**

Policy **340** is a set of rules and/or parameters used to generate control signals **320** and control signals **322.** Models **338** may contain information used to apply policy **340** in generating control signals **320** and control signals **322.** For example, a model may be present to identify an optimal operation point to minimize the total cost to operate a load. Further, policy **340** may apply a criteria for performance and/or energy use to a model within models **338** in generating control signals **320** and control signals **322.**

Policy **340** may provide tools to balance the performance, energy use, and life of a particular load or set of loads. The policy may specify balancing these types of parameters for a single load, a primary load and an associated life extension load, or an entire grouping of loads within system management environment **300.** In these examples, policy **340** may be used to reduce a total cost for one or more loads within life extension load system **302** and primary load system **304.** In other examples for aircraft operations, the policy may include cost factors for schedule delay, in-flight diversions, loss of capability to meet extended over water operations, and loss of automatic landing capability.

The reduction of the total cost may be performed with parameters set for performance and energy use. For example, a certain minimal level of performance may be required. The different advantageous embodiments may increase the energy use to meet the performance and to increase the life of a particular device, which may be a power source or load. By increasing the life, the total cost of the particular device may be reduced even though the energy use is increased. This total cost may be reduced because of a reduction in replacement costs and/or maintenance costs when increased energy use is applied.

In one example, a life extension load may be a cooling unit associated with a primary load in the form of an in-flight entertainment system. By maintaining the in-flight entertainment system at a particular temperature, the life of the in-flight entertainment system may be increased even though the energy consumption is increased. As a result, the total cost of the in-flight entertainment system may be reduced even though extra energy may be consumed by the cooling system associated with the in-flight entertainment system.

In this example, by maintaining the in-flight entertainment system at the particular temperature, the life of the cooling unit may be decreased. The cost of replacing and/or maintaining the cooling unit may be small when compared to maintenance and/or replacement costs for the in-flight entertainment system. As a result, this type of operation may result in a lower total cost even though the cooling unit may be replaced more often.

In other advantageous embodiments, a primary load may not have a life extension load associated with it. In this case, the performance of the primary load may be reduced to the required level and/or a cooling system integral to the primary load may be activated more often to increase the life of the primary load.

In these examples, policy **340** is directed towards reducing the total or lifetime cost of a load or a set of loads. The total costs may include the costs of the device itself, maintenance costs for the load, and/or costs for operating the load.

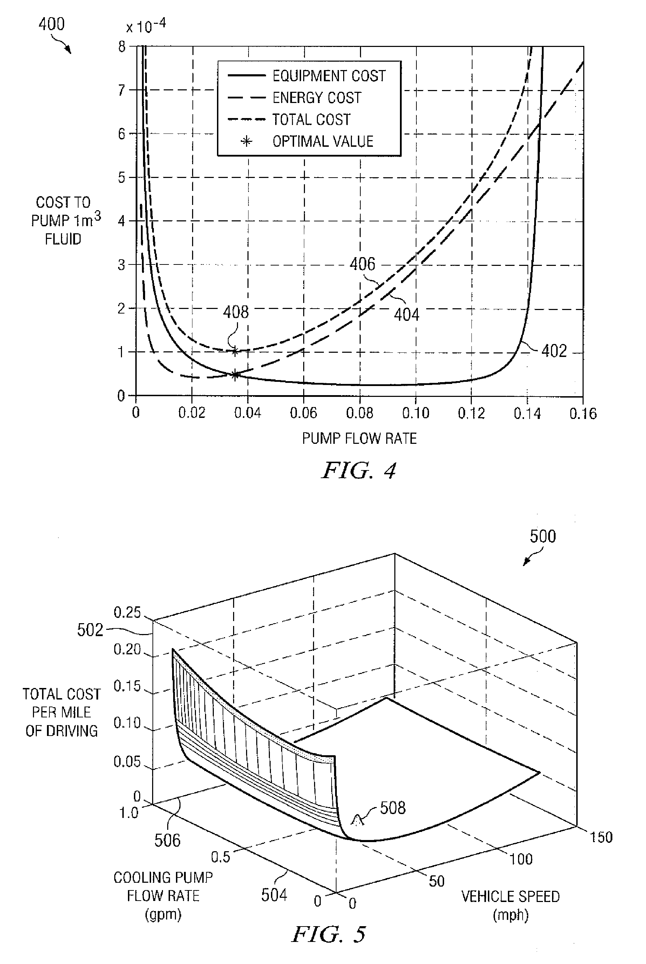

In reference now to **Figure 4****,** a diagram illustrating an example of costs versus operation is depicted in accordance with an advantageous embodiment. In this example, graph **400** illustrates cost versus an operation for a load in the form of a motorized pump. In this example, graph **400** may be used as a model in models **338** in **Figure 3****.**

In this example, the X axis represents the pump flow rate, while the Y axis represents the cost to pump one cubic meter of fluid. Line **402** in graph **400** represents the equipment cost while line **404** represents the energy cost. Line **406** represents the total cost. The equipment cost represented in line **402** includes replacement costs for the equipment as well as maintenance costs. The total cost represented in line **406** represents a combination of the energy cost and/or the equipment cost.

Line **404** is initially high because of low motor efficiency at low speeds. Further, line **402** also is initially high because of component deterioration under minimal use. Both lines **402** and **404** then decrease sharply with a small increase in the pump flow rate until the lines reach minimal cost values. As the pump flow rate continues to increase, both lines **402** and **404** then also continue to increase steadily. The energy cost increases as the pump flow rate increases in this example, because of high motor power that is needed for the high flow rate.

Further, at the higher pump flow rate, accelerated depletion of motor winding life may occur as the motor temperature increases. As can be seen in this example, an optimal total cost in line **406** may be seen at point **408.** Lines **402** and **404** may be balanced to minimize the total cost to operate the motorized pump in line **406** by balancing energy costs and equipment costs. Of course, if a certain performance level such as a desired pump flow rate is required, the total cost may increase. Graph **400** is an example of information that may be found within models **338** for different loads.

With reference now to **Figure 5****,** a diagram illustrating a total cost involved with operating a life extension load and a primary load is depicted in accordance with an advantageous embodiment. Graph **500** is an example of a model that may be found in models **338.** Graph 500 may be used along with policy **340** to control the operation of a load. In this example, graph **500** provides a total cost of operating or driving a vehicle. Further, graph **500** illustrates the total cost on axis **502.**

The cooling pump flow rate for a cooling pump in the vehicle is shown on axis **504.** Axis **506** represents the vehicle speed. The cooling flow pump rate in axis **504** is for a motorized pump, which is an example of a life extension load in this example. The vehicle speed in axis **506** represents the operation of a primary load such as an engine.

As can be seen in this example, low vehicle speeds may result in inefficient energy use and low equipment utilization. As a result, the total cost may be high. High vehicle speeds result in a loss of efficiency and faster equipment wear.

In this example, graph **500** shows that a high cooling pump flow rate increases the lifetime of the engine but may increase energy usage and decrease the lifetime of the motorized pump. Point **508** represents an optimal operating point for both the cooling pump flow rate and the vehicle speed with respect to the total cost of driving the vehicle. Of course, performance parameters, such as the minimum or maximum allowable vehicle speed, may dictate a less than optimal operating point depending on the particular implementation. The selection of point **508** may be made using policy **340** in **Figure 3****.** These types of policies may be used to calculate the total cost to operate the two loads.

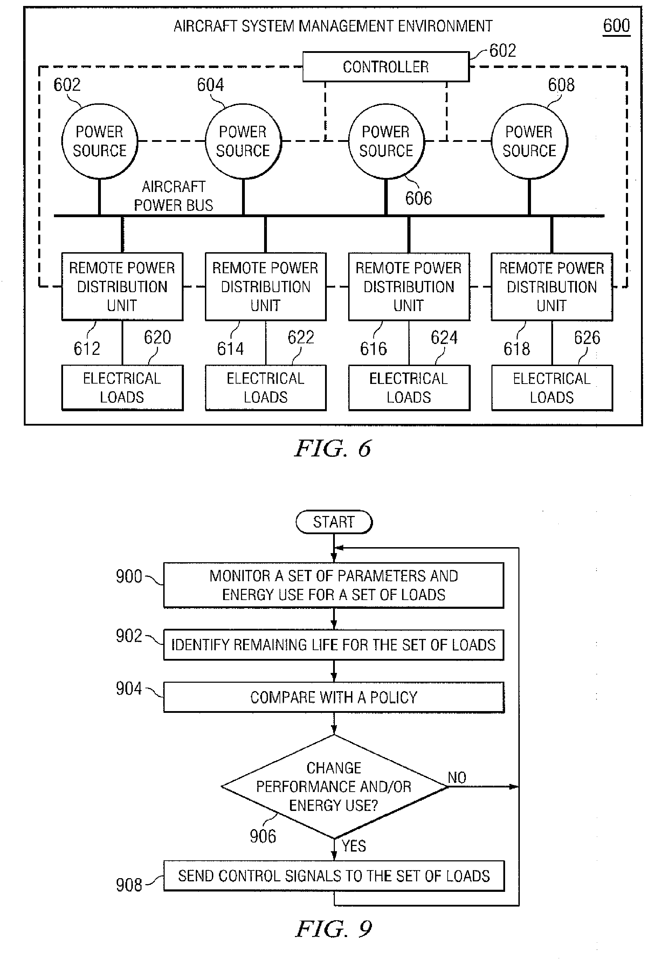

With reference now to **Figure 6****,** a diagram of a system management environment in an aircraft is depicted in accordance with an advantageous embodiment. In this example, aircraft system management environment **600** is an example of one implementation of system management environment **300** in **Figure 3****.** Although this example depicts an airplane electrical power system, aircraft system management environment **600** can be applied to manage power sources and loads that are associated with hydraulic, pneumatic, mechanical, electrical, and other types of power supplies.

In this depicted example, controller **602** may control the generation of power by power sources similar to **604, 606, 608,** and **610.** These power sources may be power generators and/or energy storage devices. These power sources generate power that may be placed onto aircraft power bus **611.** Remote power distribution units **612, 614, 616** and **618** also are connected to aircraft power bus **611.** Controller **602** also may control the distribution of power by these remote power distribution units. These remote power distribution units distribute power from aircraft power bus **611** to electrical loads **620, 622, 624** and **626.**

Controller **602** controls the generation and distribution of power to these various loads in these examples. The control signals sent to the power sources and/or remote power distribution units may be such to control the operation of loads **620, 622, 624** and **626** in a manner that reduces the total cost to operate these loads. This total cost may be a total cost for an individual load or for the loads as a group.

For example, in reducing the overall costs for loads **620, 622, 624** and **626** as a group, controller **602** may increase the total cost to run one of the electrical loads such that the overall total costs may be reduced. If a load within these loads is nearing the end of life and a maintenance operation is scheduled to occur, that particular load may be operated at a higher level such that the life of that load decreases more quickly such that the load may be replaced during the next maintenance operation.

With this type of operation, the power supplied to other loads may be reduced to increase the life of the other loads such that those loads may last longer. In these examples, if power is supplied to another power source, that power source may also be considered a load in the different advantageous embodiments. This type of selection may be made when a maintenance operation is scheduled. If the cost of maintenance to replace one load more quickly results in an increase in life of the other loads, the total cost for the loads as a whole may be reduced. Of course, in other examples, controller **602** also may control the operation of the loads in addition to or in place of the power supplied to the loads.

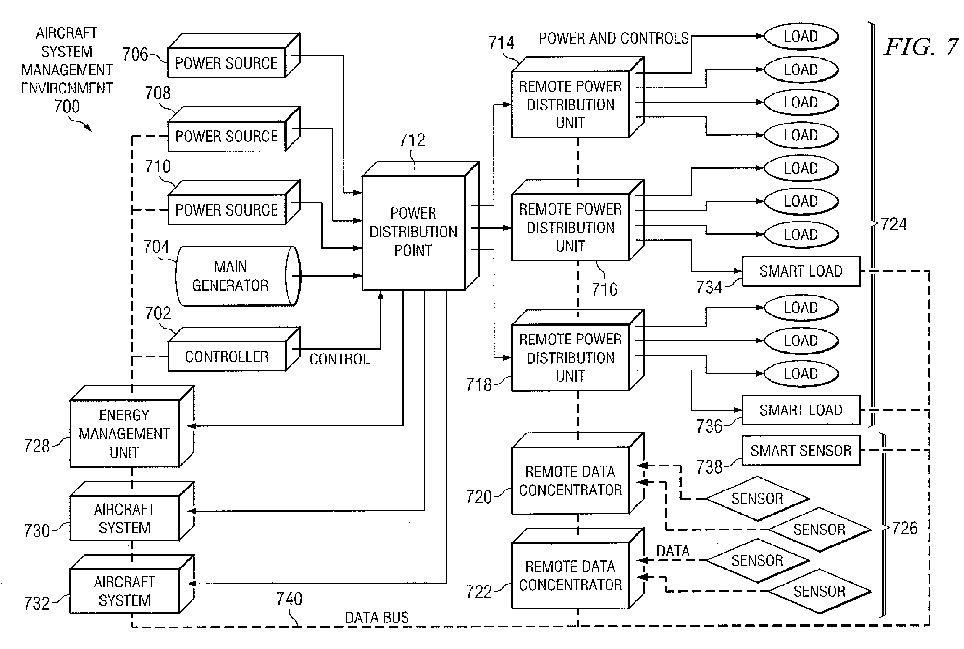

With reference now to **Figure 7****,** a diagram of a system management environment in an aircraft is depicted in accordance with an advantageous embodiment. In this example, aircraft system management environment **700** is another example of an implementation of system management environment **300** in **Figure 3****.**

In this example, controller **702** may control the generation of power by various power sources such as main generator **704,** power source **706,** power source **708,** and power source **710.** Controller **702** may be implemented using a controller such as, for example, controller **308** in **Figure 3****.** The power generated by these units may be distributed through power distribution point **712.** This power may be sent to remote power distribution units **714, 716,** and **718** for distribution to loads **724.** Remote data concentrators **720** and **722** may provide input signals to remote power distribution units **714, 716**, and **718** to turn loads within loads **724** on and/or off.

Additionally, sensors **726** may provide data that may be sent back through remote power distribution units **714** and **716** in these examples. Sensors **726** provide signals from switches or devices to turn loads on and off. Sensors **726** also may generate data such as, for example, identifying temperature in the winding of a generator or a motor, temperature in a motor drive, vibration from a fuselage of an aircraft, or other suitable sources. This data may be used to control loads **724.**

Power distribution point **712** also may supply power directly to various components such as, for example, energy management unit **728,** aircraft system **730,** and aircraft system **732.** Energy management unit **728** may control the availability of power sources such as, for example, power source **706, 708,** and **710.** For example, sensors **726** may provide energy use and parameters from loads **724.** These aircraft systems may be, for example, an in-flight entertainment system, avionics, a navigation unit, or some other suitable device or system.

Controller **702** also may control the operation of various components within aircraft system management environment **700.** Control signals may be sent to loads through data bus **740.** Data such as energy use and parameters also may be sent on data bus **740.** For example, controller **702** may control the operation of energy management unit **728,** aircraft system **730,** aircraft system **732,** smart load **734,** smart load **736,** and smart sensor **738.**

Controller **702** also may manage the operation of loads **724,** the generation of power by main generator **704,** power source **706**, power source **708,** and power source **710,** and the distribution of power by power distribution point **712,** remote distribution unit **714,** remote distribution unit **716,** remote distribution unit **718**, remote distribution unit **720,** and remote distribution unit **722.**

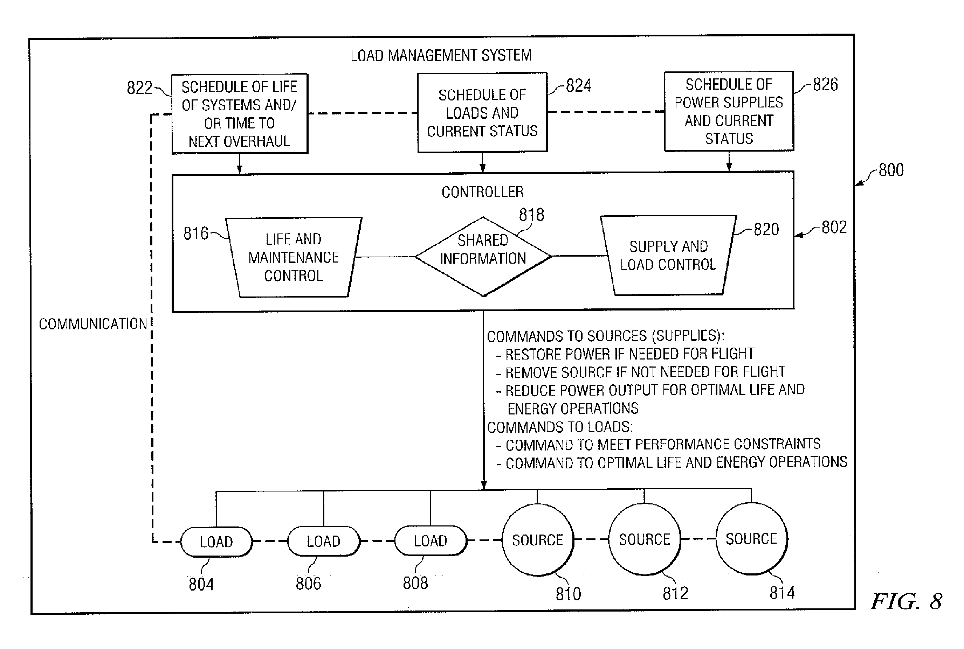

With reference now to **Figure 8****,** a diagram illustrating operating loads to optimize total cost of the loads is depicted in accordance with an advantageous embodiment. In this example, load management system **800** is an example of a load management system that is capable of controlling operation of loads based on performance, energy use, and life, to reduce a total cost for the system. Load management system **800** includes controller **802,** which may send commands to loads **804, 806,** and **808.** Additionally, controller **802** may control the power supplied by sources **810, 812,** and **815.**

In this illustrative example, controller **802** includes life and maintenance control **816,** shared information **818,** and supply and load control **820.** Life and maintenance control **816** may control the operation of loads **804, 806,** and **808.** Life and maintenance control **816** may generate commands to these loads to meet various performance constraints, as well as to form operations that may optimize the life. In optimizing life and energy operations, various performance constraints or loads **804, 806,** and **808,** are taken into account by life and maintenance control **816.**

Supply and load control **820** sends commands to sources **810, 812,** and **814** to supply power to loads **804, 806,** and **808.** These commands may connect or disconnect these power sources as well as turn on or off these power sources based on performance and energy constraints. For example, supply and load control **820** may turn off power if power is not needed and restore power when more power is needed by loads **804, 806,** and **808.**

Shared information **818** is information that may be supplied by life and maintenance control **816** to supply and load control **820,** and/or from supply and load control **820** to life and maintenance control **816** to meet various constraints.

The generation of commands in these examples may be based on various inputs. In these examples, the inputs include, for example, without limitation, schedule of life of systems and/or time to next overhaul **822,** schedule of current loads and status **824,** and schedule of power supplies and current status **826.**

With reference now to **Figure 9****,** a flowchart of a process for operating a set of loads is depicted in accordance with an advantageous embodiment. The process illustrated in **Figure 9** may be implemented in a controller such as, for example, controller **308** in **Figure 3****.**

The process begins while monitoring a set of parameters and energy use for a set of loads (operation **900**). The parameters and energy use may be identified using sensors associated with the loads. Energy use also may be identified based on knowing the amount of power sent to the set of loads. The parameters and energy use may be identified for each load individually as well as for the set of loads as a group.

The process then identifies remaining life for the set of loads (operation **902**). The process then compares the parameters, energy use, and/or remaining life with a policy (operation **904**). The policy may include a set of rules in which the parameters, energy use, and/or life may be compared with a model. In these examples, the model may be a model for the total cost of operating a load. In these examples, a model may be present for each load within the set of loads. Further, a model also may be present for the set of loads as a whole.

Next, a determination is made as to whether performance and/or energy use should be changed for the set of loads (operation **906**). This change may be for one or more loads within the set of loads. If a change should be made, control signals are sent to the set of loads (operation **908**). The process then returns to operation **900** as described above. If a change is not to be made, the process proceeds directly back to operation **900.**

Thus, the different advantageous embodiments provide a method and apparatus for operating loads. The different advantageous embodiments may include processes and a controller that are capable of controlling the operations of a set of loads. This set of loads may include a primary load as well as a life extension load that is associated with the primary load. The life extension load is capable of operating to extend the life of the primary load. The controller controls the operation of the loads based on performance, energy use, and life to reduce a total cost of operating the loads.

The different advantageous embodiments can take the form of an entirely hardware embodiment, an entirely software embodiment, or an embodiment containing both hardware and software elements. Some embodiments are implemented in software, which includes forms, such as, for example, without limitation, firmware, resident software, and microcode.

Furthermore, the different embodiments can take the form of a computer program product accessible from a computer usable or computer readable medium providing program code for use by or in connection with a computer or any device or system that executes instructions. For the purposes of this disclosure, a computer usable or computer readable medium can generally be any tangible apparatus that can contain, store, communicate, propagate, or transport the program for use by or in connection with the instruction execution system, apparatus, or device.

The computer usable or computer readable medium can be, for example, without limitation, an electronic, magnetic, optical, electromagnetic, infrared, or semiconductor system, or a propagation medium. Non limiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W) and DVD.

Further, a computer usable or computer readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example, without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Nonlimiting examples, such as modems and network adapters, are just a few of the currently available types of communications adapters.

Alternative embodiments may also be claimed as follows:
A15. An apparatus comprising: a load; and a controller capable of controlling an operation of the load based on performance, energy use, and life time to reduce a total cost of the load.
A16. The apparatus of claim A15 further comprising: a life extension load capable of extending a life of the load, wherein the controller is capable of controlling the operation of the life extension load based on the performance, the energy use, and the life time to reduce the total cost of the load and the life extension load.
A17. The apparatus of claim A16 further comprising: a power source capable of supplying power to the load and the life extension load.
A18. The apparatus of claim A17, wherein in controlling the operation of the load, the controller is capable of controlling the power supplied to the load.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus (300), comprising:
a power source (306) capable of supplying power;
a set of primary loads (312) capable of being operated using the power;
a set of life extension loads (310) capable of being operated using the power and capable of extending a life of the set of primary loads; and
a controller (308) capable of controlling an operation of the set of primary loads and the set of life extension loads based on performance, energy use, and life to reduce a total cost.

2. The apparatus of claim 1, further comprising:
a model (338) of the set of primary loads and the set of life extension loads, wherein the model provides information about the performance, the energy use, and the life for the set of primary loads and the set of life extension loads.

3. The apparatus of claim 1, wherein the controller at least one of
controls the performance and the energy use by the set of primary loads and the set of life extension loads to meet a policy for at least one of the performance, the energy use, and the life,
increases the energy use for a life extension load in the set of life extension loads to increase a related life of an associated primary load and wherein an associated total cost for the life extension load and the associated primary load is reduced, and
increases a first associated life of a selected primary load in the set of primary loads by decreasing a second associated life of a selected life extension load in the set of life extension loads and wherein the associate total cost for the selected primary load and the selected life extension load is reduced.

4. The apparatus of claim 1, wherein in controlling the operation of the set of primary loads and the set of life extension loads, the controller is capable of controlling the power supplied to the set of primary loads and the set of life extension loads.

5. The apparatus of claim 4, wherein the controller is capable of controlling the power used by the set of primary loads and the set of life extension loads.

6. The apparatus of claim 1, wherein a life extension load within the set of life extension loads is used to extended the life of the power source.

7. The apparatus of claim 6, wherein the controller controls the life extension load to reduce a cost of the life extension load and the power source.

8. The apparatus of claim 1, wherein the set of primary loads comprises at least one of a hydraulic system, avionics, a landing gear system, an engine, a brake system, an environmental control system, a navigation system, and an in-flight entertainment system.

9. The apparatus of claim 1, wherein the set of life extension loads comprises at least one of a liquid cooling system, a ram air cooling system, an extended cooling system, a vibration control device, an acoustic control device, a power filtering unit, a fluid filtering unit, and a lubrication unit.

10. The apparatus of claim 1, further comprising:
a vehicle (200), wherein the power source, the set of primary loads, the set of life extension loads, and the controller are located within the vehicle.

11. The apparatus of claim 10, wherein the vehicle is selected from one of aircraft, a spacecraft, a land vehicle, and an aquatic vehicle.

12. A method for operating a set of loads (310, 312), the method comprises:
monitoring (900) a set of parameters and energy use for the set of loads;
identifying (902) a remaining life for the set of loads; and
changing (906) at least one of performance and energy use for the set of loads to reduce a total cost for the set of loads based on a policy.

13. The method of claim 12, wherein the changing step comprises:
increasing the energy use by a life extension load (310) in the set of loads to increase a life of a primary load in the set of loads, wherein the total cost of the set of loads is reduced; and
decreasing a performance of the primary load in the set of loads to cause at least one of an increase in the life of the primary load (312) and a reduction in the energy use of the primary load, wherein the total cost of the set of loads is reduced.

14. The method of claim 13, further comprising:
sending (908) control signals to the set of loads.
